# EUROPEAN PATENT SPECIFICATION

(11) **EP 0 444 672 B1**
(45) Date of publication and mention of the grant of the patent: **30.11.1994**
(21) Application number: 91103015.3
(22) Date of filing: 28.02.1991
(51) Int. Cl.: B60L 11/18

(54) **Speed controller of electric-motor vehicle**
Geschwindigkeitsregler für ein Fahrzeug mit elektrischem Motor
Régulateur de vitesse d'un véhicule à moteur électrique

(30) Priority: 28.02.1990 JP 48387/90
(43) Date of publication of application: 04.09.1991
(73) Proprietor: SUZUKI MOTOR CORPORATION, Shizuoka-ken (JP)
(72) Inventor: Shibata, Akira, Hamana-gun, Shizuoka-ken (JP)
(74) Representative: Klingseisen, Franz, Dipl.-Ing.

(56) References cited:
- DE-A- 1 513 648
- US-A- 4 511 825
- ELEKTRONIK, vol. 38, no. 18, 01 September 1989, München, DE, pp. 53-60 ; H. SAX: "Gleichstrommotoren richtig ansteuern"

## Description

The invention relates to an apparatus for controlling the traveling speed of an electric-motor vehicle having the features of the preamble of claim 1. Particularly the invention refers to a speed controller of an electric-motor vehicle suitably used for controlling the speed of an electric-motor wheeled chair or the like which is limited in maximum speed.

Such a speed controller of an electric motor vehicle is known from US-PS 4511825.

The maximum speed of, for example, an electric-motor wheeled chair among electric-motor vehicles is restricted in maximum speed under the laws.

For that reason, the maximum speed is restricted by such means as that a certain torque value of a traveling motor, such as the number of rotation of the motor in a driving torque corresponding to a traveling state of a vehicle on a flat road is restrained to a constant value to determine the maximum speed or the number of rotation of the traveling motor is detected using a sensor and a closed-loop control is performed by feeding back such detected number.

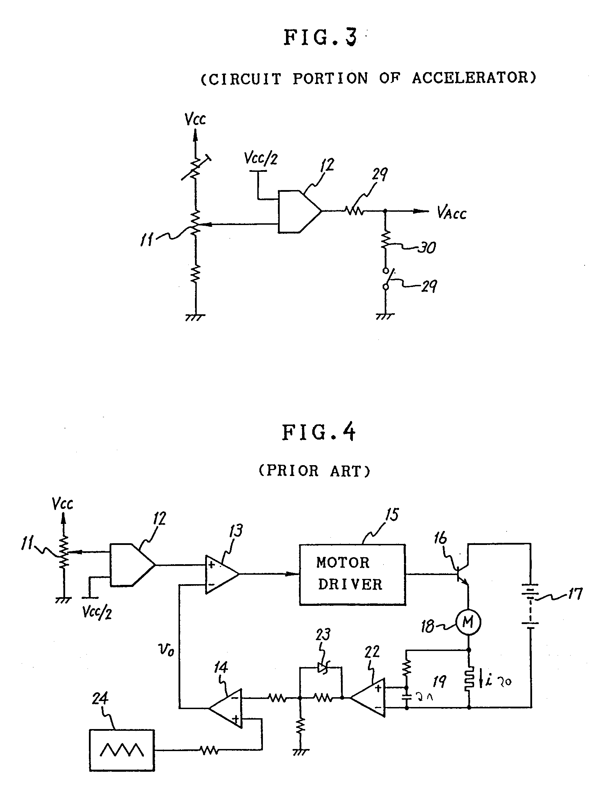

Fig. 4 shows one example of the constitution of a conventional speed controller of an electric-motor vehicle. In the Figure, there is exemplified a device in which a traveling motor is controlled by chopper control. In Fig. 4, the numeral 11 denotes a variable resistor connected to an operating lever of an electric-motor wheeled chair, 12 an absolute value amplifier, 13 a comparator, 14 an operational amplifier, 15 a motor driver, 16 a driving transistor, 17 a power source comprising a battery, 18 a traveling motor, 19 a current detecting shunt, 20 a resistance, 21 a condenser, 22 an operational amplifier, 23 a constant voltage diode, and 24 a reference chopping signal generator, respectively.

The variable resistor 11 is connected to a space between a power source voltage V_{cc} and the ground and generates an output voltage (voltage of an accelerator) V_{ACC} corresponding to the amount of operation (opening degree of the accelerator) of the unshown operating lever. This output voltage V_{ACC} is V_{CC}/2 at an intermediate position (neutral state of the operating lever) and becomes larger or smaller depending on forward or reverse. The output voltage V_{ACC} serves as a drive indicating signal for the speed controller for an electric-motor vehicle. The output voltage of the variable resistor 11 is also subjected to the use of other purposes than forward and reverse discrimination.

The absolute value circuit 12 generates an output voltage, the amount of which is proportional to the forward or reverse speed, by amplifying the absolute value of a difference between the output voltage of the variable resistor 11 and the reference voltage V_{CC}/2 and this signal is fed to the "+" input side of the comparator 13.

On the other hand, a current value of the motor 18 is detected by the current detecting shunt 19 which is connected in series to the motor 18 and a signal obtained by a circuit comprising the resistance 20 and the condenser 21 in a DC form is amplified by the operational amplifier 22 in order to obtain an output voltage. The output voltage of the operational amplifier 22 is fed to the "-" input side of the operational amplifier 14 through the constant voltage diode 23.

As the operational amplifier 14 is operated as a differential amplifier and a reference chopping signal from the chopping signal generator 24 is fed to the "+" input side of the amplifier 14, the operational amplifier 14 generates an output voltage V_{O} comprising a chopping signal which is varied in width and amplitude in accordance with a period of time during which the chopping signal exceeds the output voltage of the operational amplifier 22 which is fed through the constant voltage diode 23. This signal is fed to the "-" input side of the comparator 13.

The comparator 13 generates a PWM signal which is varied in pulse width in accordance with the adjusting position of the variable resistor 11 by outputting a signal when output of the absolute value amplifying circuit 12 is larger than the chopping signal output of the operational amplifier 14. The motor driver 15 controls the transistor 16 in accordance with the output of the comparator 13. By this, a chopper control current flows to the motor 18 from the power source 17 via the transistor 16 and the motor 18 is rotated to cause the electric-motor wheeled chair to travel.

In this way, in the constitution of Fig. 4, a chopping signal obtained by the operational amplifier 14 from a difference between an output signal obtained by amplifying a voltage proportional to current i of the motor and the reference chopping signal is used as a voltage V_{O} to be compared with an output of the absolute value amplifying circuit 12 in the comparator 13. By this, when the opening degree of the accelerator is gradually enlarged, that is, when the output voltage from the absolute value circuit 12 becomes large, as there can be obtained a PWM signal, the pulse width of which becomes gradually large, from the comparator 13, current having a duty which becomes large in accordance with the opening degree of the accelerator flows to the motor 18 and by this, the chopper control is performed in which the driving force becomes gradually large.

In the constitution of Fig. 4, the constant voltage diode 23 is adapted to enhance the traveling stability when the load is not heavy to obtain a comfortable feeling (comfortable to drive) by keeping the duty unchanged at a low driving current time of the motor 18.

In this case, when the load to the motor is heavy as when the vehicle is traveling on an uphill slope or as when the motor is in a high speed range, the width and amplitude of the chopping wave become large in the output voltage V_{O} generated from the operational amplifier 14. Therefore, when the opening degree of the accelerator is large, the duty of a signal generated from the comparator 13 becomes 100% and therefore, the motor 18 becomes able to generate the maximum output.

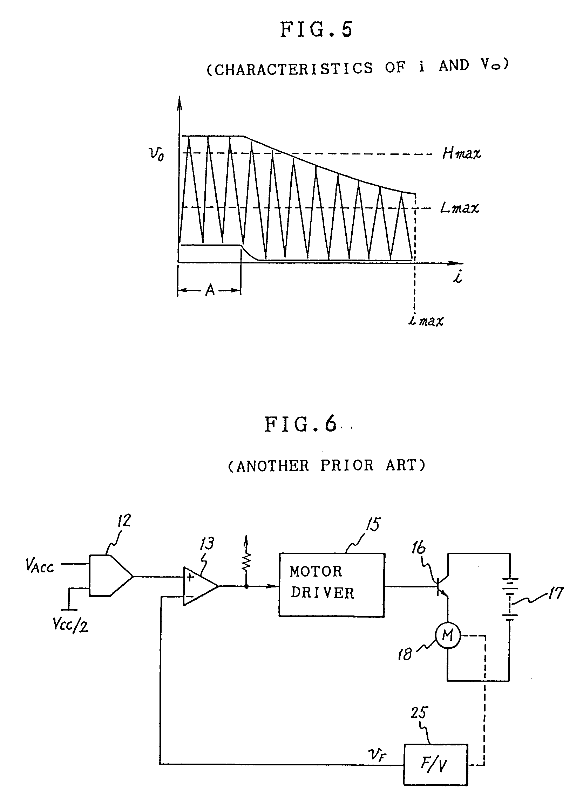

Fig. 5 shows the characteristics of the motor current i and the output voltage V_{O} of the operational amplifier 14 in the example of the constitution (or block diagram) of Fig. 4. As apparent from Fig. 5, as the motor current i flows corresponding to a period of time during which the output voltage V_{O} comprising a chopping wave is small compared with an absolute value amplifying circuit output Hₘₐₓ corresponding to the maximum value in a high speed range as shown by a broken line and with an absolute value amplifying circuit output Lₘₐₓ corresponding to the maximum value of the accelerator in a low speed range as shown likewise by a broken line, the duty gradually becomes large when the motor current i is large, and the duty becomes 100% at a certain motor current or more particularly when the motor is in a high speed range. Also, in the range where the motor current i is small, there is a range A where the duty becomes constant irrespective of change in load (motor current) both in high speed and low speed ranges owing to the affection of the constant voltage diode 23.

Fig. 6 shows another example of the constitution (or block diagram) of a conventional speed controller of an electric-motor vehicle, wherein like parts of Fig. 4 are denoted by like reference numerals. The numeral 25 denotes a frequency/voltage (F/V) converter.

In the example of Fig. 6, an output voltage V_{F} of the size proportional to the number of rotation of the motor 18 is generated by the F/V converter 25 in accordance with the pulse from a rotation sensor disposed to the motor 18. As this output voltage V_{F} is fed to the "-" input side of the comparator 13, the comparator 13 takes off a difference between this and the output voltage of the absolute value amplifying circuit 12 already applied to the "+" input side. By the voltage of this difference, the transistor 16 is driven through the motor driver 15 thereby to control the flow of current to the motor 18.

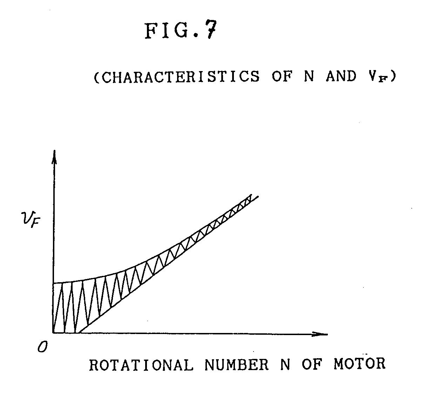

Fig. 7 shows the characteristics of the rotational number N of the motor and the output voltage V_{F} of the F/V converter 25 in the example of Fig. 6. Since a ripple is included in the output voltage V_{F} of the F/V converter 25, it exhibits the illustrated output characteristics. In this case, the smaller the rotational number N of the motor is, the greater the affection of the ripple becomes.

In the speed controller of an electric-motor vehicle shown in Fig. 4, as is shown in Fig. 5, the duty of the motor driving current does not become 100% in the low speed range and in the range where the opening degree of the accelerator is small and the driving force of the motor is in short. In order to compensate this, the gain of the operational amplifier 22 of Fig. 4 is made large, so that the "-" input side of the operational amplifier becomes large when the motor current becomes large. However, to make the gain of the feed-back loop small is to effect a large amount of such compensation as to increase the duty of the motor current when the motor current is small. This gives an unnatural feeling. If a strong compensation is effected so that the duty is not changed owing to the constant voltage diode 23 when a small current flows, it also exhibits an unnatural feeling as shown in Fig. 5.

In the speed controller of an electric-motor vehicle shown in Fig. 6, since the ripple portion is large in the area where the rotation of motor is low as shown in Fig. 7, behavior becomes awkward in the low speed. Also, as this is a method in which the duty can always become 100%, an excessive torque is readily generated and operation becomes too sensitive. In order to reduce the ripple of the output voltage V_{F}, the time constant of the F/V converter may be made large. However, if the time constant of the F/V converter is made large, a response becomes slow and another problem arises in operation.

The present invention aims at solving the above-mentioned problems in the prior art. It is therefore an object of the invention to provide a speed controller of an electric-motor vehicle in which torque, if necessary, can be acted by controlling the number of rotation and the characteristics can be desirably changed by changing the gain of the amplifier without jeopardizing the feeling at a normal traveling time on a flat road.

This object is solved by a speed controller of an electric-motor vehicle having the features of claim 1.

The present invention is designed such that in a speed controller of an electric-motor vehicle for controlling the speed of a traveling motor by chopper control in accordance with a drive indicating signal, said speed controller of an electric-motor vehicle includes speed deviation detecting means for generating a signal of a difference between a signal indicating the opening degree of an accelerator and a signal indicating the number of rotation of the motor, chopping level control means for outputting a chopping signal changeable in level by reducing the output of said speed deviation detecting means from a reference chopping signal, and PWM signal generating means for generating a pulse in accordance with a period of time during which the level of a signal indicating the opening degree of the accelerator exceeds an output chopper of said chopper level control means, current flow of said motor being controlled in accordance with output of said PWM signal generating means. And the flow of current to the motor is controlled corresponding to the output of the PWM signal generating means. By this, the present invention attempts to achieve the above object.

In the speed controller of an electric-motor vehicle as an object of the present invention, the speed control of the traveling motor is performed by chopper control for, changing the duty of a driving current in accordance with the PWM signal changeable in pulse width in accordance with drive indicating signal.

In order to perform the above-mentioned control, a signal of a difference between a signal showing the opening degree of the accelerator and the number of rotation of the motor is prepared, and the level of the reference chopping wave is changed by substructing this output from the signal of the reference chopping wave And by generating a pulse corresponding to a period of time during which the level of a signal showing the opening degree of the accelerator exceeds the chopping wave obtained by changing this level, and a chopper control for controlling the flow of current to the motor is performed in accordance with this PWM signal.

Therefore, according to the present invention, the shortage of power of the motor can be overcome by effecting the control of the number of rotation when torque is required without changing the feeling at a normal traveling on a flat road.

In the following the invention is described in more detail referring to the drawing.
Fig. 1 is a view showing a speed controller of an electric-motor vehicle according to the present invention,
Fig. 2 is a view showing the characteristics of the motor current and the output voltage V_{O} of the operational amplifier in the speed controller of Fig. 1,
Fig. 3 is a view showing an example of the constitution of the circuit portion of the accelerator in the present invention,
Fig. 4 is a view showing an example of the constitution of a speed controller of an electric-motor vehicle according to the prior art,
Fig. 5 is a view showing the characteristics of the motor current and the output voltage of the operational amplifier in the example of the constitution of Fig. 4,
Fig. 6 is a view showing another example of the constitution of a speed controller of an electric-motor vehicle according to the prior art, and
Fig. 7 is a view showing the characteristics of the rotational number N of the motor and the output voltage V_{F} of the F/N converter in the example of the constitution of Fig. 6.

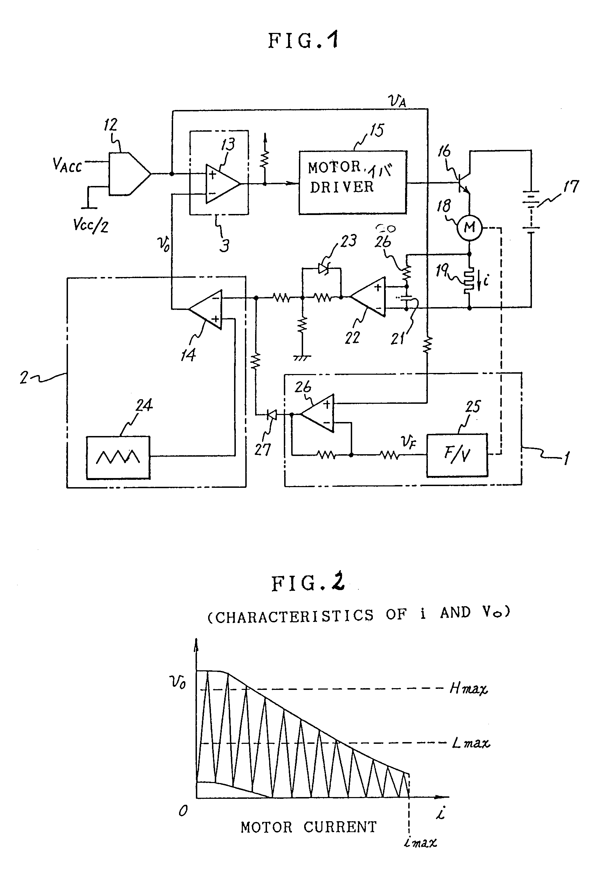

Fig. 1 shows a speed controller of an electric-motor vehicle according to the present invention, in which like parts of Figs. 4 and 6 are denoted by like reference numerals. The numeral 27 denotes a diode.

In Fig. 1, the F/V converter 25 generates a output voltage V_{F} of the size proportional to the number of rotation of the motor 18, and this output voltage V_{F} is applied to the "-" input side of the operational amplifier 26. Since the output voltage V_{A} of the absolute value amplifying circuit 12 is already applied to the "+" input side of the operational amplifier 26, when the output voltage V_{F} of the F/V converter 25 is small relative to the output voltage V_{A}, an output voltage of the size changeable depending on the difference is generated.

Also, the current value of the motor 18 is detected by the current detecting shunt 19 which is connected in series to the motor 18 and a signal obtained by the resistance 20 and the condenser 21 in a DC form is amplified by the operational amplifier 22 in order to obtain an output voltage.

The output voltage of the operational amplifier 22 is applied to the "-" input side of the operational amplifier 14 through the constant voltage diode 23, and the output voltage of the operational amplifier 26 is applied to the "-" input side of the operational amplifier 14 through the diode 27.

The operational amplifier 14 generates an output voltage V_{O} comprising a chopping wave changeable in width and amplitude depending on the size of the signal fed to the "-" input side by taking off the difference between the signal fed to the "-" input side and the reference chopping signal fed to the "+" input side. The comparator 13 generates an output signal changeable in pulse width corresponding to the period of time during which the output voltage V_{A} of the absolute value amplifying circuit 12 is larger than the output voltage V_{O} of the operational amplifier 14. The motor driver drives the motor 18 in accordance with the output signal of the comparator 13.

Fig. 2 shows the characteristics of the motor current i and the output voltage Vₒ of the operational amplifier 14 in the embodiment of Fig. 1. As apparent from Fig. 1, as the motor current i flows corresponding to a period of time during which the output voltage V_{O} comprising a chopping wave is small compared with an absolute value amplifying circuit output Hₘₐₓ corresponding to the maximum value in a high speed range as shown by a broken line and with an absolute value amplifying circuit output Lₘₐₓ corresponding to the maximum value of the accelerator in a low speed range as shown likewise by a broken line, the duty gradually becomes large when the motor current i is large, and the duty becomes 100% at a certain motor current or more particularly when the motor is in a high speed range.

The embodiment of Fig. 1 employs the advantages of the conventional example shown in Fig. 4. Since the constant voltage diode 23 is used to the "-" input side of the operational amplifier 14, correction based on the motor current does not work hard when the load is not heavy, that is, when the vehicle is traveling on a normal plat road, either. Also, since the diode 27 is inserted to the correcting signal side based on the number of rotation of the motor, correction likewise does not work when the difference between the output voltages V_{A} and V_{F} is small.

The larger the motor current i is, in other words, the larger the load of the motor is and the closer the duty of switching to 100% is, the larger the output of the constant voltage diode 23 becomes. In such a case like this, correction owing to the motor current works effectively. However, actually, as gain cannot be increased much in view of feeling, etc., the maximum correction cannot be performed. Not to perform an excessive correction is, in a sense, means for improving the feeling.

On the contrary, the fact that the duty does not come closer to 100% when the accelerator is low in opening degree reveals that the power of the motor is weak and there arises a necessity for compensating the power. In the embodiment of Fig. 1, as the correcting signal based on the number of rotation of the motor is connected to the "-" input side of the operational amplifier 14 through the diode 27, the insufficient power can be compensated when the accelerator is low in opening degree as shown in Fig. 5. As apparent from Fig. 5, it can realize a state of duty 100% at the maximum Lₘₐₓ of the accelerator in the slow speed range.

Fig. 3 shows an example of the constitution of a circuit portion of the accelerator in the present invention, and like parts of Fig. 4 are denoted by like reference numerals. The numeral 28 denotes a speed select switch and 29, 30 denote resistors.

In Fig. 3, when the switch 28 is turned off, the output voltage of the absolute value amplifying circuit 12 is directly output as a voltage V_{ACC} of the accelerator in the high speed range, and when the switch 28 is turned on, the output voltage of the absolute value amplifying circuit 12 is converted to a partial pressure by the resistors 29 and 30. As a result, a voltage V_{ACC} of the accelerator in the lower speed range is generated.

As described in the foregoing, according to the present invention, in a speed controller of an electric-motor vehicle in which the motor is driven by chopper control, the control based on the drive indicating signal is employed in addition to the employment of the control based on the number of rotation of the motor. By virtue of the foregoing arrangement, insufficient power of the motor can be overcome by effecting the control of the number of rotation when torque is required without changing the feeling at a normal traveling on a flat road. Also, the characteristics of this case can be desirably set by changing the gain of the amplifier for amplifying the signal of the number of rotation of the motor. Furthermore, the control based on the motor current can be employed in addition to the employment of the control based on the number of rotation based on the motor.

## Claims

1. A speed controller for an electric-motor vehicle for controlling the speed of a traveling motor (18) by chopper control in accordance with a drive indicating signal, said speed controller of an electric-motor vehicle comprising:
speed deviation detecting means (1) for generating a signal of a difference between a reference signal (V_{A}) indicating the opening degree of an accelerator and a signal indicating the number of rotation of said motor (18),
voltage signal generating means (19 -22) for generating a voltage signal representing the current value of said motor (18),
chopping level control means (2) and
PWM signal generating means (3), the current flow of said motor (18) being controlled in accordance with the output of said PWM signal generating means,
**characterized in that**
said chopping level control means (2) outputs a chopping signal (v₀) changeable in level by subtracting the output of said speed deviation detecting means (1) and the output of said voltage signal generating means (19 -22) from a reference chopping signal and said PWM signal generating means (3) generates a pulse in accordance with a period of time during which the level of a signal indicating the opening degree of said accelerator exceeds an output chopper of said chopper level control means.

## Patentansprüche

1. Geschwindigkeitsregelvorrichtung für ein Fahrzeug mit einem elektrischen Motor zum Steuern der Geschwindigkeit eines Fahrmotors (18) durch Zerhackersteuerung in Übereinstimmung mit einem Antriebsanzeigesignal, wobei die Geschwindigkeitsregelvorrichtung für ein Fahrzeug mit einem elektrischen Motor umfaßt:
eine Geschwindigkeitsabweichungsermittlungseinrichtung (1) zum Erzeugen eines Signals einer Differenz zwischen einem Bezugssignal V_{A}, das den Öffnungsgrad einer Beschleunigungseinrichtung anzeigt, und einem Signals, das die Drehzahl des Motors (18) anzeigt,
eine Spannungssignalerzeugungseinrichtung (19-22) zum Erzeugen eines Spannungssignals, das den Stromwert des Motors (18) wiedergibt,
eine Zerhackerpegelsteuereinrichtung (2) und
eine PWM-Signalerzeugungseinrichtung (3), wobei der Stromfluß des Motors (18) in Übereinstimmung mit dem Ausgang der PWM-Signalerzeugungseinrichtung gesteuert wird,
dadurch gekennzeichnet, daß
die Zerhackerpegelsteuereinrichtung (2) ein Zerhackersignal V₀ ausgibt, dessen Pegel durch Subtrahieren des Ausgangs der Geschwindigkeitabweichungsermittlungseinrichtung (1) und des Ausgangs der Spannungssignalerzeugungseinrichtung (19-22) von einem Bezugszerhackersignal änderbar ist, wobei die PWM-Signalerzeugungseinrichtung (3) einen Impuls in Übereinstimmung mit einer Zeitperiode erzeugt, während welcher der Pegel eines Signals, das den Öffnungsgrad der Beschleunigungseinrichtung anzeigt, einen Zerhackerausgang der Zerhackerpegelsteuereinrichtung übertrifft.

## Revendications

1. Régulateur de vitesse pour un véhicule à moteur électrique pour commander la vitesse d'un moteur de véhicule (18) par découpage d'un courant selon un signal indicateur d'excitation, ledit régulateur de vitesse d'un véhicule à moteur électrique comprenant:
- des moyens de détection d'écart de vitesse (1) pour produire un signal représentatif d'une différence entre un signal de référence (V_{A}) indiquant le degré d'ouverture d'un accélérateur et un signal indiquant la vitesse de rotation dudit moteur (18);
- des moyens générateurs de signal en tension (19-22) pour produire un signal en tension représentant l'intensité du courant dans ledit moteur (18);
- des moyens de commande de niveau de découpage de courant (2); et
- des moyens générateurs de signal à modulation de largeur d'impulsions (3), l'intensité du courant circulant dans ledit moteur (18) étant commandée selon le signal de sortie desdits moyens générateurs de signal à modulation de largeur d'impulsions,
caractérisé en ce que:
- lesdits moyens de commande de niveau de découpage de courant (2) fournissent un signal de découpage de courant (v₀) à niveau modifiable en soustrayant le signal de sortie desdits moyens de détection d'écart de vitesse (1) et le signal de sortie desdits moyens générateurs de signal en tension (19-22) d'un signal de référence de découpage de courant, et lesdits moyens générateurs de signal à modulation de largeur d'impulsions (3) produisent une impulsion selon une période de temps pendant laquelle le niveau d'un signal indiquant le degré d'ouverture dudit accélérateur dépasse le signal de sortie de découpage de courant desdits moyens de commande de niveau de découpage de courant.
